# EUROPEAN PATENT APPLICATION

(11) **EP 4 704 030 A1**
(43) Date of publication of application: **04.03.2026**
(21) Application number: 25194806.3
(22) Date of filing: 08.08.2025
(51) Int. Cl.: G06T 7/246, G06T 7/33, G06T 7/73

(54) **IMAGE PROCESSING APPARATUS, CONTROL METHOD, AND STORAGE MEDIUM**

(30) Priority: 02.09.2024 JP 2024150437
(71) Applicant: Canon Kabushiki Kaisha, Tokyo, 146-8501 (JP)
(72) Inventor: FUEDA, Ryo, Tokyo, 146-8501 (JP)
(74) Representative: TBK

(57) **Abstract**

An image processing apparatus (1000) includes image capturing position movement direction limiting means for selecting, from plural time series images acquired from an image capturing means (10) disposed on a movable apparatus (1000) for capturing surrounding images, first and second images captured when the movable apparatus was at first and second positions, respectively, and controlling a movement direction of an image capturing position to the first position and the second position; feature point matching means (230) for selecting a reference image and a search subject image from the first image and the second image, and performing feature point association; and reference image switching means (220) for switching the reference image based on information showing a movement direction of the movable apparatus. The feature point matching means searches for each feature point in the search subject image within a search range limited based on the movement direction of the movable apparatus.

## Description

### TECHNICAL FIELD

The present disclosure relates to an image processing apparatus, a control method, a storage medium, and the like.

### BACKGROUND

There is a technology that matches points having the same features between a plurality of images (referred to below as feature point matching). Feature points that have been associated with each other by feature point matching are used in SfM, and vSLAM, which re-configure 3-dimensional information from images, and are expected to contribute to autonomous driving and robotics. SfM is an abbreviation of Structure from Motion. vSLAM is an abbreviation of visual Simultaneous Localization and Mapping. When performing feature point matching, if corresponding points are searched for from all of the input images, a vast computational complexity becomes necessary, and the processing time becomes long, and therefore, conventionally, a variety of methods to increase the speed thereof have been considered.

For example, in Japanese Unexamined Patent Application, First Publication No. 2022-143412 when corresponding points for feature points in one image are being searched for, the search range is limited based on the self-position estimation information for a vehicle, and the computational complexity of the feature point matching is thereby decreased.

In addition, in Japanese Unexamined Patent Application, First Publication No. 2000-285245, the search range is limited based on the position of the vanishing point, and the operational complexity for detecting a movable apparatus is thereby reduced.

In Japanese Unexamined Patent Application, First Publication No. 2022-143412, the computational complexity is decreased by limiting the search range.

In addition, in Japanese Unexamined Patent Application, First Publication No. 2000-285245, the search range is limited based on the position of the vanishing point.

### SUMMARY

However, in Japanese Unexamined Patent Application, First Publication No. 2022-143412, processing for setting the search range is necessary, and therefore, it is possible that the processing will not be able to be completed in real time. In addition, in Japanese Unexamined Patent Application, First Publication No. 2000-285245, the search range is made the range from the vanishing point to the edge of the image, and therefore, there are cases in which the processing amount cannot be sufficiently decreased due to the position of the vanishing point.

The present disclosure has the goal of providing an image processing apparatus that reduces the processing amount according to feature point matching, and is able to increase the processing speed.

The present disclosure in its first aspect provides an image processing apparatus as specified in claim 1. Optional features are specified in claims 2 to 7.

The present disclosure in its second aspect provides a method for controlling an image processing apparatus as specified in claim 8.

The present disclosure in its third aspect provides a non-transitory storage medium as specified in claim 9.

Features of the present disclosure will become apparent from the following description of embodiments with reference to the attached drawings. The following description of embodiments is described by way of example.

According to the present disclosure, it is possible to provide an image processing apparatus that reduces the processing amount associated with feature point matching and that is able to perform faster processing.

### BRIEF DESCRIPTION OF THE DRAWINGS

FIG. 1 is a configurational diagram of a movable apparatus according to a First Embodiment of the present disclosure.
FIG. 2A, and FIG. 2B are schematic diagrams showing an installation position and an image capturing direction for an image capturing unit according to the First Embodiment.
FIG. 3 is a schematic diagram showing time series images that are captured by an image capturing unit according to the First Embodiment.
FIG. 4A, and FIG. 4B are schematic diagrams in which feature points are extracted from captured images from a front camera according to the First Embodiment.
FIG. 5A, and FIG. 5B are schematic diagrams of switching a reference frame based on an advancing direction of the movable apparatus according to the First Embodiment.
FIG. 6A, and FIG. 6B are schematic diagrams showing the performance of a corresponding point search in a search range that has been determined in advance according to the First Embodiment.
FIG. 7 is an explanatory diagram relating to epipolar geometry according to the First Embodiment.
FIG. 8 is an operational flowchart for an integration processing unit according to the First Embodiment.
FIG. 9 is an operational flowchart for a reference frame switching unit according to the First Embodiment.
FIG. 10 is an operational flowchart for a feature point matching unit according to the First Embodiment.
FIG. 11 is an operational flowchart for a 3-dimensional information generating unit according to the First Embodiment.
FIG. 12 is a configurational diagram for a movable apparatus according to the Second Embodiment of the present disclosure.
FIG. 13 is an operational flowchart for an integration processing unit according to the Second Embodiment.
FIG. 14 is an operational flowchart for a reference frame switching unit according to the Second Embodiment.
FIG. 15 is a configurational diagram for a movable apparatus according to a Third Embodiment of the present disclosure.
FIG. 16 is an explanatory diagram relating to epipolar geometry according to a Third Embodiment.
FIG. 17 is an operational flowchart for an integration processing unit according to the Third Embodiment.
FIG. 18 is an operational flowchart for a feature point matching unit according to the Third Embodiment.
FIG. 19 is a configurational diagram for a movable apparatus according to a Fourth Embodiment of the present disclosure.
FIG. 20 is a schematic diagram showing an installation position and an image capturing direction of an image capturing unit according to the Fourth Embodiment.

### DESCRIPTION OF THE EMBODIMENTS

Below, embodiments of the present disclosure will be explained with reference to the figures. However, the present disclosure is not limited to the embodiments that are described below. In addition, the following embodiments do not limit the present disclosure according to the claims, and the entirety of the combinations of features that are explained in the present embodiments are not all necessarily indispensable for the means to solve the present disclosure. Note that in each diagram, the same reference numerals have been attached to the same parts and elements, and duplicate explanations will be simplified or omitted.

### First Embodiment

Below, a First Embodiment of the present disclosure will be explained with reference to the figures. In the First Embodiment, in a camera that captures images from the same direction as the advancing direction of the movable apparatus or the opposite direction as the advancing direction of a movable apparatus, a movement direction of an image capturing position is limited by switching a reference frame for feature point matching based on the advancing direction of the movable apparatus. Furthermore, in the First Embodiment, a method of making feature point matching faster, and by extension thereof making SfM and vSLAM faster, by limiting the search range for the feature point matching along with limiting the movement direction of the image capturing position is explained.

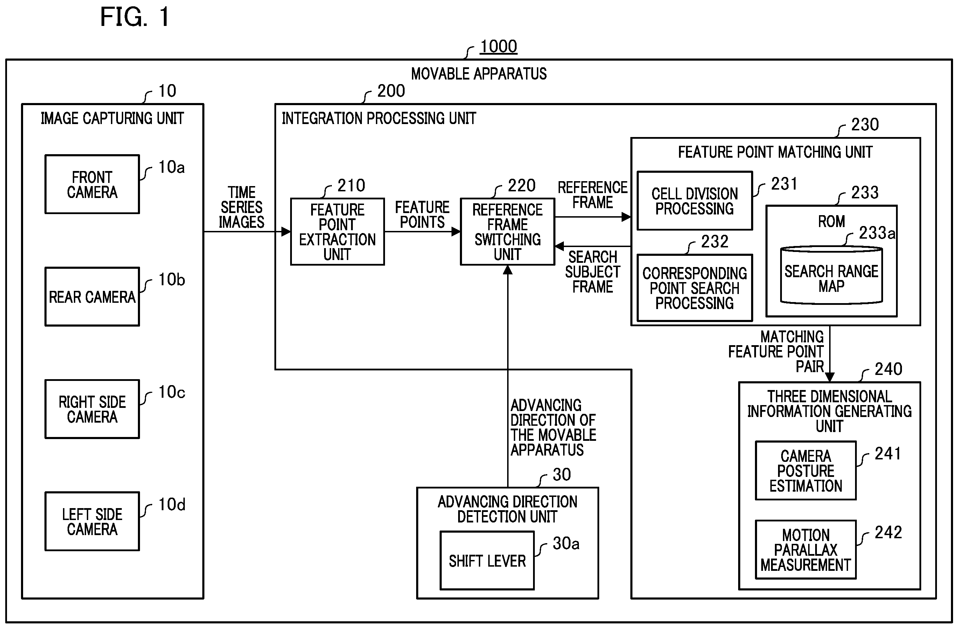

FIG. 1 is a configurational diagram for a movable apparatus 1000 according to the First Embodiment. The movable apparatus 1000 is, for example, a vehicle, and has an image capturing unit 10, an integration processing unit 200, and an advancing direction detecting unit 30. The movable apparatus 1000 is one example of an image processing apparatus.

The image capturing unit 10 is a vehicle mounted camera that is able to capture images from any direction in the surroundings of the movable apparatus 1000, as is represented by, for example, a front camera 10a, a rear camera 10b, a right side camera 10c, and a left side camera 10d. The image capturing unit 10 may be one camera, or it may also consist of a plurality of cameras. The front camera 10a captures images of the front direction of the movable apparatus 1000. The rear camera 10b captures images of the rear direction of the movable apparatus 1000. The right side camera 10c and the left side camera 10d, are, for example, cameras that are used in a camera monitor system for use in an electronic side mirror, and the right side camera 10c captures images of the right rear side direction and the left side camera 10d captures images of the left rear side direction of the movable apparatus 1000. Each camera that is included in the image capturing unit 10 is one example of an image capturing unit that is disposed on the movable apparatus 1000 and captures images of surroundings of the movable apparatus 1000.

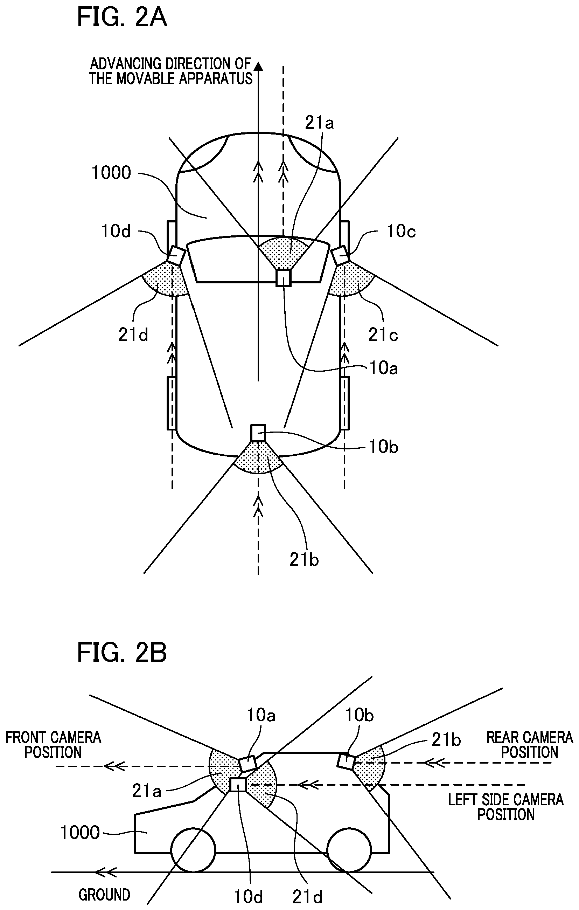

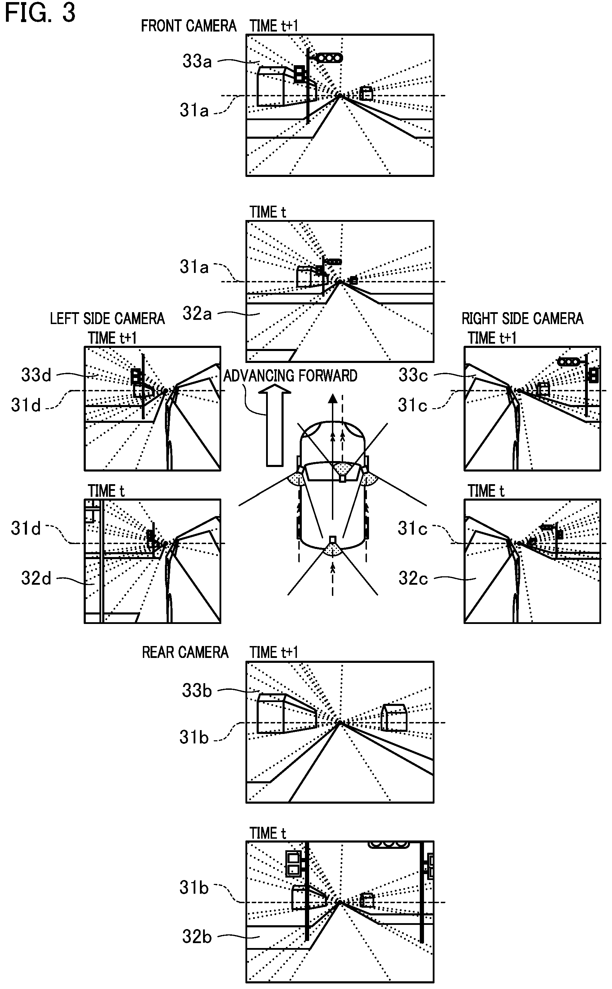

The installation position of the image capturing unit 10 is shown in FIG. 2A, and FIG. 2B. FIG. 2A is a plane diagram of the mobile apparatus 1000. FIG. 2B is a side view diagram of the movable apparatus 1000. In this context, a plane that is parallel to the ground that the camera travels on is called the camera position. In addition, the camera position of the front camera 10a is referred to as the front camera position 31a (refer to FIG. 3). The camera position of the rear camera 10b is referred to as the rear camera position 31b (Refer to FIG. 3), The camera position of the right side camera 10c is referred to as the right side camera position 31c (refer to FIG. 3). The camera position of the left side camera 10d is referred to as the left side camera position 31d (refer to FIG. 3).

In addition, the front camera 10a is attached to the movable apparatus 1000 such that the image capturing direction 21a of the front camera 10a becomes an orientation in which it is possible to capture images in a direction that is parallel to the advancing direction of the movable apparatus 1000. The rear camera 10b is attached to the movable apparatus 1000 such that the image capturing direction 21b of the rear camera 10b becomes an orientation at which it is possible to capture images in a direction that is parallel to the opposite direction of the advancing direction of the movable apparatus 1000. The right side camera 10c and the left side camera 10d are attached to the movable apparatus 1000 such that the image capturing direction 21c of the right side camera 10c and the image capturing direction 21d of the left side camera 10d become orientations in which it is possible to capture images of a direction that is parallel to the opposite direction of the advancing direction of the movable apparatus 1000.

The explanation will return to FIG. 1. The image capturing unit 10 acquires each image capturing signal that has been captured as an optical image for each time, and outputs two time series images, a time series image img (t), and a time series image img (t+1) that have been acquired by RAW photo processing each image capturing signal in the order of the time series, to the integration processing unit 200.

Note that image capturing unit 10 has an image processing unit that is not shown, and this image processing unit may have a distortion aberration correction function. This image capturing unit performs distortion aberration correction on the time series image img (t) and the time series image img (t+1). Due to this processing, it becomes possible to show the front camera position 31a, the rear camera position 31b, the right side camera position 31c, and the left side camera position 31d using straight lines on an image.

FIG. 3 is a diagram showing time series images that are captured by each camera of the image capturing unit 10 in a case in which the mobile apparatus 1000, which is a vehicle, is advancing forward. The time series image img (t) from the time t that was captured by the front camera 10a is the time series image 32a, and the time series image (t+1) from the time t+1 that was captured by the front camera 10a is the time series image 33a. The time series image img (t) from the time t that was captured by the rear camera 10b is the time series image 32b, and the time series image (t+1) from the time t+1 that was captured by the rear camera 10b is the time series image 33b. The time series image (t) for the time t that was captured by the right side camera 10c is the time series image 32c, and the time series image img (t+1) from the time t+1 that was captured by the right side camera is the time series image 33c. The time series image img (t) for the time t that was captured by the left side camera 10d is the time series image 32d, and the time series image img (t+1) for the time t+1 that was captured by the left side camera 10d is the time series image 33d.

Note that the time series image 32b and the time series image 33b that have been acquired from the rear camera 10b, the time series image 32c and the time series image 33c that have been acquired from the right side camera 10c, and the time series image 32d and the time series image 33d that have been acquired from the left side camera 1 are all left-right inverted. However, right and left do not need to be inverted in images during the implementation of the present disclosure.

Note that although in order to simplify FIG. 3, the vanishing point and an epipole, which will be explained below in the context of a feature point matching unit 230, are positioned on the same coordinates on the image plane, in a real captured image, the coordinates for the vanishing point and the epipole will not necessarily overlap. In addition, although in order to simplify FIG. 3, the image capturing has been performed such that the bottom edge of the image is parallel to the ground, in a real captured image, it is not absolutely necessary to perform image capturing such that the bottom edges of the image become parallel to the ground.

The explanation will return to FIG. 1. The integration processing unit 200 has a feature point extraction unit 210, a reference frame switching unit 220, the feature point matching unit 230, and a three-dimensional information generating unit 240. In addition, the integration processing unit 200 has a CPU that is not depicted that controls each of the units 210 to 240, and a RAM that is also not depicted and functions as a primary storage medium. CPU is an abbreviation of Central Processing Unit. RAM is an abbreviation of Random Access Memory.

The feature point extraction unit 120 has a feature point extraction function that extracts feature points in an image based on an input image, and is implemented as, for example, a SoC/FPGA function. SoC is an abbreviation of System on Chip. FPGA is an abbreviation of Field Programmable Gate Array. Note that it is sufficient if the feature point extraction function is implemented using a general technique such as, for example, SIFT, ORB, and the like. SIFT is an abbreviation of Scale-Invariant Feature Transform. ORB is an abbreviation of Oriented FAST and Rotated BRIEF.

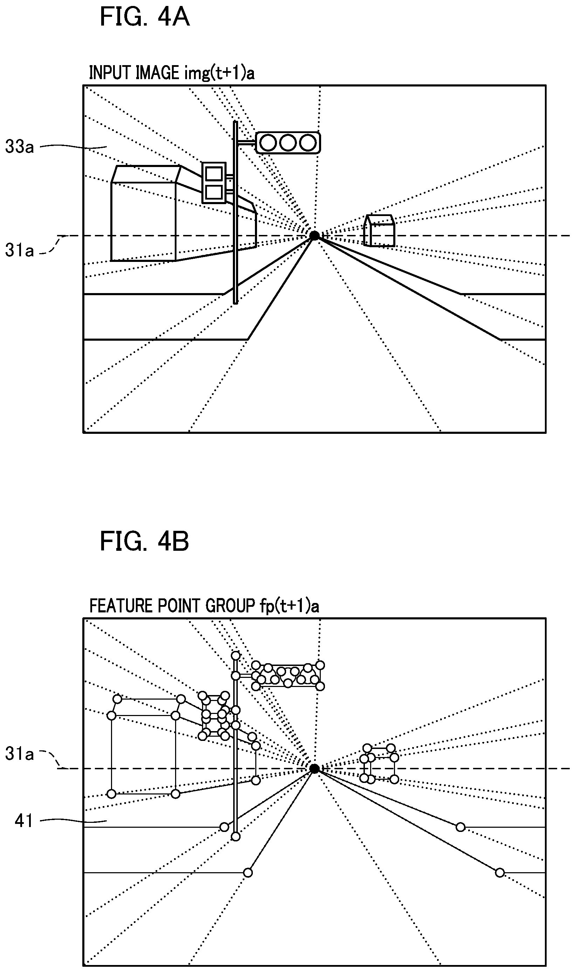

A schematic diagram in which feature points are extracted from the image img (t+1)a that was captured by the front camera 10a is shown in FIG. 4A, and FIG. 4B. FIG. 4A is a diagram showing an input image, and FIG. 4B is a diagram showing a feature point group. In a case in which an image img (t+1)a such as that shown in FIG. 4A is used as the input image for the feature point extraction function, it is made such that a feature point group fp (t+1)a such as the point group 41 shown in FIG. 4B is extracted.

Note that generally, feature points are extracted from, for example, edge portions such as the contours of specific objects, the borders between objects in a plurality of objects, and the like in an image, using an algorithm that is used in feature point extraction. In addition, it is easy to extract feature points from portions having the maximum point and minimum point for luminance of patterns such as tiles, mosaics, and the like, and there are various methods. Therefore, it is not absolutely necessary to extract the feature points from the edge portions of the input image as in FIG. 4A, and FIG.4B, and the algorithm that is used in feature point extraction is not limited.

The explanation will return to FIG. 1. The feature point extraction unit 210 outputs the feature point group fp (t) that has been extracted from the time series image img (t), and the feature point group fp (t+1) that has been extracted from the time series image img (t+1) and outputs this to the reference frame switching unit.

The reference frame switching unit 220 is implemented as, for example, a SoC/FPGA function. In this context, from among the feature point group fp (t) that has been extracted from the time series image img (t), and the feature point group fp (t+1) that has been extracted from the time series image img (t+1), a feature point group that will become the reference for corresponding point search processing 232 to be described below is made a feature point group fp_ref. In addition, the image for the time corresponding to the reference feature point group fp_ref is made the reference image img_ref. In addition, the data set for the reference feature point group and the reference image is referred to as a reference frame. In addition, the feature point group that becomes a search subject for the corresponding point search processing 232 is made a search subject feature point group fp_sub, and an image from a time corresponding to the search subject feature point group is made the search subject image img_sub. In addition, the data set of the search subject feature point group and the search subject image are referred to as the search subject frame.

The reference frame switching unit 220 has a control register that is not shown that maintains the image capturing direction of each camera of the image capturing unit 10, and a writing destination pointer for both frames of the reference frame and the search subject frame.

In addition, the reference frame switching unit 220 has a reference frame switching function that switches the writing destination pointer for the reference frame and the writing destination pointer for the search subject frame of the control register. The reference frame switching function switches the writing destination pointer for the reference frame and the writing destination pointer for the search subject frame of the control register based on the advancing direction signal for the movable apparatus that has been input from the advancing direction detection unit 30 and the image capturing directions of each camera.

In addition, the reference frame switching unit 220 makes one from among the time series feature point groups fp (t), and fp (t+1) that have been input from the feature point extraction unit 210 the reference feature point group fp_ref, and makes the other the search subject feature point group fp_sub. The reference frame switching unit 220 outputs the reference feature point group fp_ref and the search subject feature point group fp_sub to the feature point matching unit 230.

In this context, the reference frame switching unit 220 assumes that the image capturing positions for each frame that has been input will transition from the image capturing position for the reference image to the image capturing position for the search subject image. The reference frame switching unit 220 switches the reference frame and the search subject frame such that the direction in which the image capturing position of the image transitions becomes a direction that is opposite to the image capturing direction of the camera. The reference frame switching unit 220 is one example of a reference image switching unit that switches a reference image based on information showing a movement direction of a movable apparatus.

In this context, the advancing direction of the movable apparatus 100 is made forward advancing. In this case, in the case of the time series image img (t)a, and the time series image img (t+1)a that have been captured by the front camera 10a, the reference frame switching unit 220 makes the time series image img (t+1)a the reference image, and makes time series image img (t)a the search subject image. In addition, in this case, with the times series images that have been captured by the rear camera 10b, the reference frame switching unit 220 makes the time series image img (t)b the reference image, and makes the time series image img (t+1)b the search subject image. In addition, in this case, with the time series images that have been captured by the right side camera 10c, the reference frame switching unit 220 makes the time series image img (t)c the reference image, and makes the time series image img (t+1)c the search subject image. In addition, in this case, with each time series image that has been captured by the left side camera 10d, the reference frame switching unit 220 makes the time series image img (t)d the reference image, and makes the time series image img (t+1)d the search subject image.

In this context, the advancing direction of the movable apparatus 1000 is made backwards advancing. In this case, in the case of the times series image img (t)a, and the time series image img (t+1)a that were captured by the front camera 10a, the reference frame switching unit 220 makes the time series image img (t)a the reference image, and makes the time series image img (t+1)a the search subject image. In addition, in this case, with the times series images that have been captured by the rear camera 10b, the reference frame switching unit 220 makes the time series image img (t+1)b the reference image, and makes the time series image img (t)b the search subject image. In addition, in this case, with the time series images that have been captured by the right side camera 10c, the reference frame switching unit 220 makes the time series image img (t+1)c the reference image, and the time series image img (t)c the search subject image. In addition, in this case, with the time series images that have been captured by the left side camera 10d, the reference frame switching unit 220 makes the time series image (t+1)d the reference image, and makes the time series image img (t)d the search subject image.

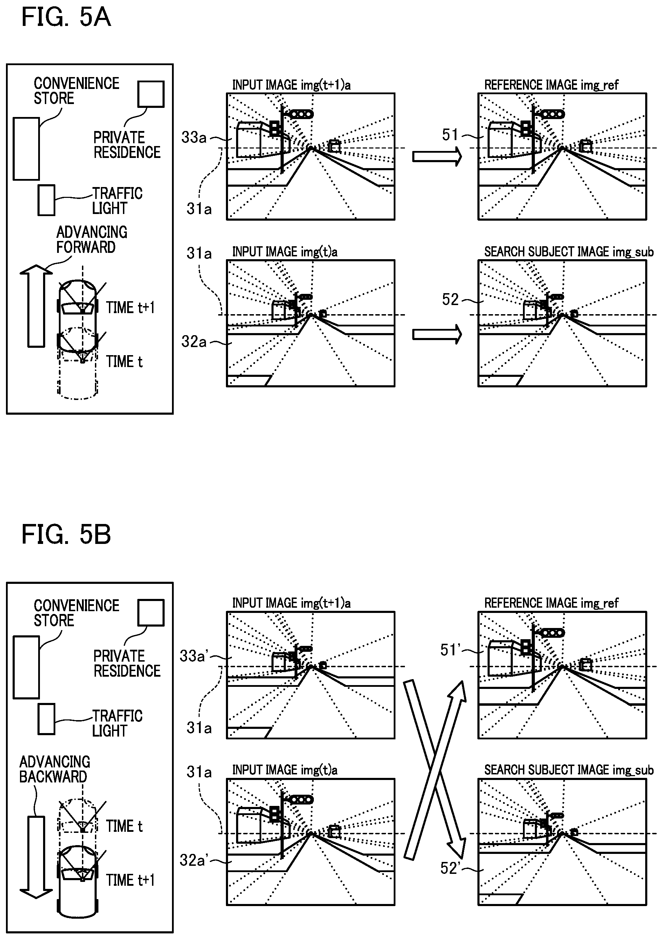

FIG. 5A and FIG. 5B show examples of cases in which the reference image img_ref and the search subject image img_sub have been switched from the time series image img(t)a and the time series image img (t+1)a that were captured by the front camera 10a according to the advancing direction of the movable apparatus 1000. FIG. 5A is a diagram of a case in which the state of a shift lever 30a is drive or low, and a case in which the movable apparatus 1000 is advancing forwards. FIG. 5B is a diagram of a case in which the state of the shift lever 30a is reverse, and a case in which the movable apparatus 1000 is advancing backwards.

For example, the reference frame switching unit 220 outputs the reference frame image 51 and the search subject image 52 in a case in which the time series image 32a and the time series image 33a have been input when the advancing direction of the movable apparatus 1000 is forwards advancing (refer to FIG. 5A). In addition, for example, the reference frame switching unit 220 outputs the reference image 51' and the search subject image 52' in a case in which the time series image 32a' and the time series image 33a' have been input when the advancing direction of the movable apparatus 1000 is backwards advancing (refer to FIG. 5B)

Note that in a case in which switching has been performed so as to transition the image capturing position for the images to a direction that is opposite the image capturing direction of the camera according to the advancing direction of the movable apparatus 1000, transition is performed such the image capturing position moves away from a still object that has been image captured, and therefore, this appears as is shown in FIG. 5A, and FIG. 5B.

Note that in this context, it is made such that the direction for when the transition is being made from the image capturing position for the reference image to the image capturing position for the search subject image is referred to as the movement direction for the image capturing position. In particular, in the First Embodiment, with respect to the movement direction for the image capturing position, the direction that is opposite to the image capturing direction of the camera is made the positive direction, and the direction that aligns with the image capturing direction of the camera is made the negative direction.

As was described above, it is possible to limit the movement direction of the image capturing position to one direction regardless of changes to the advancing direction of the movable apparatus by switching the reference frame and the search subject frame based on the advancing direction of the movable apparatus. The unit for limiting this movement direction of the image capturing position is one example of an image capturing position movement direction limiting unit that limits the movement direction of the image capturing position to a first position and a second position. Furthermore, it is possible to limit in advance the search range for corresponding point search processing 232 that will be explained below by limiting the movement direction of the image capturing position.

In addition, in the First Embodiment, the reference frame and the search subject frame are switched such that the movement direction for the image capturing position becomes the opposite direction of the image capturing direction of the camera. By doing this, it becomes such that the image capturing position for the search subject frame has been image captured from more toward the rear than the image capturing position for the reference frame and therefore, there are no cases in which the feature point corresponding to the reference feature point becomes outside of the image capturing range for the search subject frame, and a corresponding point search can be efficiently performed.

The explanation will return to FIG. 1. The feature point matching unit 230 is configured by, for example, a RAM that serves as a CPU and a primary storage medium, and a ROM 233 that stores a search range map 233a that will be explained below. ROM is an abbreviation of Read Only Memory. The feature point matching unit 230 performs cell division processing 231 and corresponding point search processing 232 by the CPU thereof executing a program. The feature point matching unit 230 is one example of a feature point matching unit that selects both a reference image and a search subject image from the first image and the second image, and performs feature point association.

The cell division processing 231 is processing that divides each frame from the reference frame and the search subject frame that have been input from the reference frame switching unit 220 into cells of a determined range. For example, it is sufficient if, in a case in which, for example, a frame of 1920 × 1080 pixels has been input, the cell division processing 231 divides this into, for example, 16 × 9 cells in a range of 120 × 120.

The corresponding point search processing 232 is processing that, after choosing a feature point from among the reference feature point group fp_ref, performs association (referred to below as matching) for feature points that searches for points that correspond to the feature point that has been selected from among the search subject feature point group fp_sub. Note that it is sufficient if the matching is implemented by using, for example, a general method such as brute force matcher, and the like.

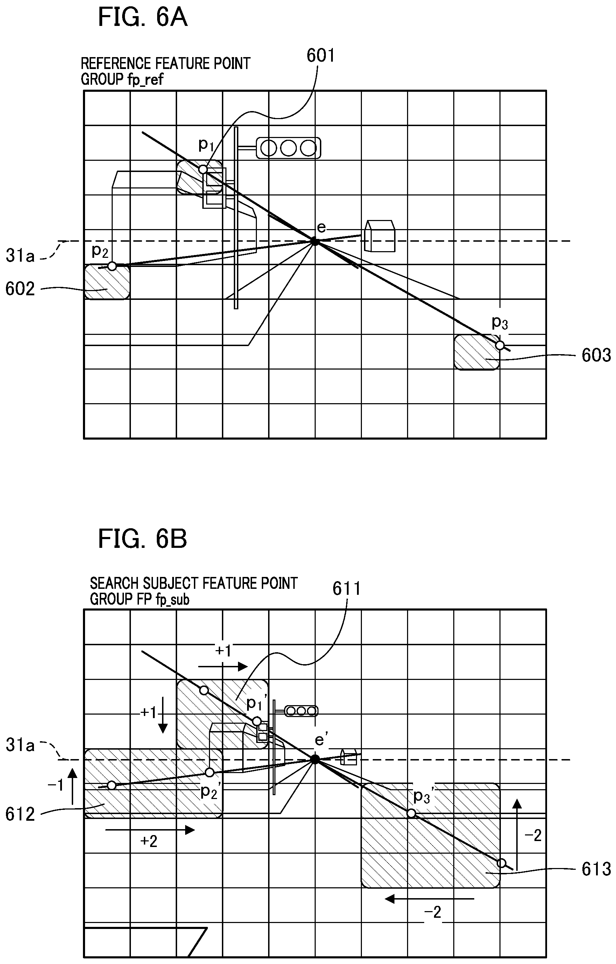

However, the corresponding point search processing 232 performs matching within the range that has been limited based on the search range map 233a that has been stored on the ROM 233. In this context, an explanation will be given in relation to the limitation of the matching region based on the search range map 233a using FIG. 6A, and FIG. 6B.

FIG. 6A and FIG. 6B are diagrams showing the reference frame and the search subject frame that have been formed by an image that was captured using the front camera 10a. FIG. 6A shows a reference feature point group, and FIG. 6B shows a search subject feature point group.

The p1, p2, and p3 shown in FIG. 6A are each feature points that are included in the reference feature point group fp_ref {p1, p2, p3}. The p1', p2', and p3' that are shown in FIG. 6B are each feature points that are included in the search subject feature point group fp_sub {p1', p2', and p3'}.

In addition, the e, and e' shown in FIG. 6A, and FIG. 6B are points (referred to below as epipoles) at which a baseline and the image plane overlap according to each camera when each frame of the reference frame and the search subject frame have been image captured. In addition, straight lines that connect each of the feature points p1, p2, and p3 with the epipole e, and straight lines that connects each of the feature points p1', p2', and p3' with the epipole e' are epipolar lines.

As is shown in FIG. 6A and FIG. 6B, the search range map 233a is assigned a unique size per each cell. For example, it is sufficient if the position of corresponding cells is made the starting point, and the search range map 233a that corresponds to the cell 601 is assigned a search range 611 (+1, +1), the search range map 233a corresponding to the cell 602 is assigned a search range 612 (+2, -1), and the search range map 233a corresponding to the cell 603 is assigned a search range 613 (-2, - 2). At this time, as is shown in FIG. 6B, in the First Embodiment, the direction to which the search range is limited may be the direction that faces the epipole. The search range map 233a is one example of a search range based on range information that has been determined in advance.

The corresponding point search processing 232 selects one feature point from among the reference frame that was cell divided, and performs matching on the search subject frame within the range that has been limited based on the search range map 233a corresponding to the cell in which the selected feature point is included.

As has been described above, it is possible to reduce the computational complexity during the feature point matching processing by performing the corresponding point search processing 232 within a range that has been limited in advance based on the movement direction of the image capturing position that has been limited while limiting the movement direction of the image capturing position to one direction.

In addition, by referencing the search range map 233a that has been determined in advance, it is possible to begin the corresponding point search processing 232 early without needing to set the search range as the internal processing.

In addition, the movement direction of the image capturing position is limited to one direction and therefore, it is not necessary to change the search range according to changes in the advancing direction of the movable apparatus 1000. Therefore, it is sufficient if one search range map 233a is stored regardless of the advancing direction of the movable apparatus 1000, and it is therefore possible to suppress the ROM volume necessary to store the search range map 233a. In addition, this is improved if the search range map 233a is provided for each cell rather than for each pixel by performing cell division, and therefore, it is possible to suppress the ROM volume that is necessary to store the search range map 233a.

After this, the corresponding point search processing 232 repeats the matching for all of the feature points that are included in the reference feature point group fp_ref.

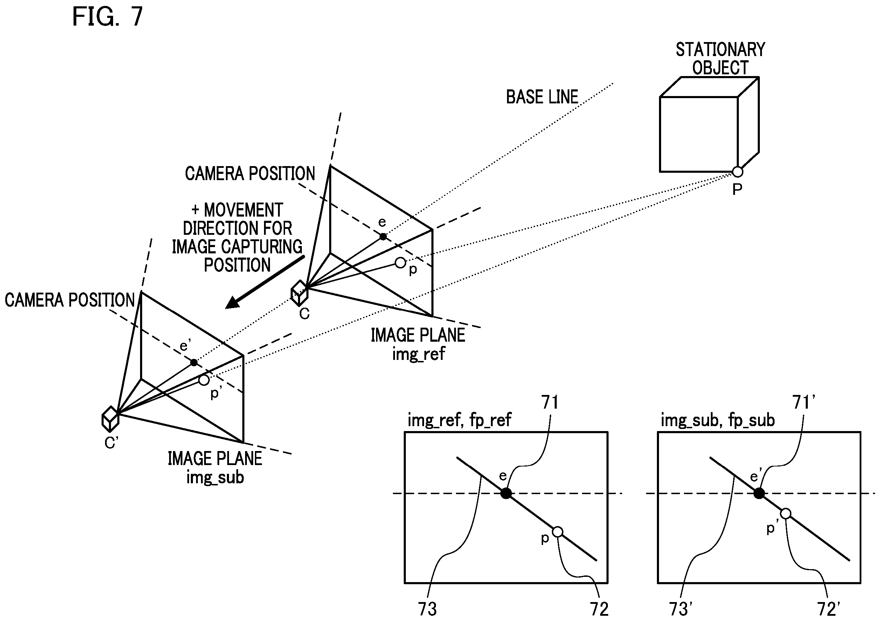

Note that in a case in which the movable apparatus 1000 is advancing forwards parallel to the ground without turning, or in a case in which the movable apparatus 1000 is advancing backwards parallel to the ground without turning, ideally, the coordinates of the epipole do not change and are uniquely determined from the attachment position of the camera and the angle that the attachment position of the camera makes with the ground, and the like. The movement direction of the image capturing position, the position of the epipole, and the position of the feature point for such a case are shown in FIG. 7.

FIG. 7 is a diagram explaining a case in which the movable apparatus is in the middle of advancing forwards or advancing backwards. In FIG. 7, the point e at which the baseline connecting the position C of the camera in the reference frame and the camera position C' in the search subject frame overlaps with the image plane in each frame is made the epipole 71, and the position e' at which the baseline connecting the position C of the camera in the reference frame and the camera position C' in the search subject frame overlaps with the image plane in each frame is made the epipole 71'. At this time, the movable apparatus 1000 is advancing forward or backward parallelly to the ground and therefore, both the epipole e, and the epipole e' exist on the camera position. In addition, this is a case in which the movable apparatus 1000 is advancing forward or backwards without turning, and therefore, ideally, there are no changes in the coordinates of the epipole e, and the epipole e'.

In contrast, the point p, at which a straight line connecting the camera position C to the coordinate P in the real space of the feature points overlaps with the image plane of each frame is made the feature point 72 in the image , and the point p' at which the straight line connecting the camera position C' with the coordinate P in the real space of the feature point overlaps with the image plane of each frame is made the feature point 72' in the image. In addition, the straight line that connects the epipole e and the feature point p is made the epipolar line 73, and the straight line that connects the epipole e' to the feature point p' is made the epipolar line 73'. At this time, due to an epipolar constraint, the epipolar line 73 and the epipolar line 73' are on the same plane, and in the First Embodiment, the movable apparatus 1000 is advancing forward or backwards parallelly to the ground without turning, and therefore, the positions of the epipolar lines on the image do not change.

Therefore, in the First Embodiment, it is possible to limit the search range for when transition is performed from the feature point p to the feature point p' to the direction facing the epipole by limiting the movement direction of the image capturing position to the positive direction, and it is possible to reduce the computational complexity of the corresponding point search processing 232.

Note that in reality, due to, for example, vibrations and the like when the movable apparatus 1000, which is a vehicle, is travelling, the positions of the epipole e, and epipole e' become separate from each other. In this context, in a case in which this separation is taken into consideration, the present disclosure may also be implemented by calculating the deviation amount for the positions of the epipoles that have been uniquely determined from the installation position of the camera and the angle that this forms with ground, and the like, and performing the corresponding point search processing 232 within a specific set threshold value.

The explanation will return to FIG. 1. The feature point matching unit 230 outputs a pair of a feature point from within the reference feature point group and a feature point from within the search subject feature point group that have been associated by the corresponding point search processing 232 to the three-dimensional information generating unit 240 to serve as a matching feature point pair.

The three-dimensional information generating unit 240 is configured by, for example, a CPU, a RAM that serves as a primary storage medium, and a ROM that is not depicted that stores internal parameters of the camera and the like. The three-dimensional information generating unit 240 performs camera posture estimation 241 and motion parallax measurement 242 by the CPU thereof executing a program.

The camera posture estimation 241 calculates external parameters of the camera based on the matching feature point pair that was input from the feature point matching unit 230 and internal parameters of the camera that have been stored on the ROM. The external parameters of the camera are, for example, a movement amount and a rotation angle for the camera in relation to the image capturing position for the reference frame. The camera posture estimation 241 outputs the external parameters of the camera that have been calculated to the motion parallax measurement 242. Note that it is sufficient if the camera posture estimation 241 is implemented by using a general method that is utilized during SfM, such as, for example, an 8 point method, a 5 point method, or the like. The camera posture estimation 241 is one example of an image capturing position posture calculating unit that calculates information relating to a position posture of an image capturing unit. The camera posture estimation 241 may also generate information showing the movement direction of the movable apparatus based on information relating to the position posture of the image capturing unit.

The motion parallax measurement 242 generates three-dimensional coordinates for the feature points in relation to the image capturing position for the reference frame based on the external parameters for the camera, the internal parameters for the camera, and the matching feature point pair. In this context, the external parameters for the camera that are used by the motion parallax measurement 242 are external parameters of the camera that have been input from the camera posture estimation 241. In addition, the internal parameters for the camera that are used by the motion parallax measurement 242 are internal parameters of the camera that have been stored on the ROM. In addition, the matching feature point pair that is used by the motion parallax measurement 242 is the matching feature point pair that has been input from the feature point matching unit 230. Note that the motion parallax measurement 242 may also be implemented using a general technique that is used during SfM such as, for example, triangulation that is used during stereo vision, and the like.

Note that although in the present context, an explanation has been given of a case in which the integration processing unit 200, the feature point matching unit 230, and the three-dimensional information generating unit 240 each have an individual CPU, the entirety of the processing that has been explained above may also be performed using one CPU.

**In** addition, in this context, an explanation has been given of an example in which the feature point extraction unit 210 and the reference frame switching unit 220 are implemented using SoC/FPGA, and the feature point matching unit 230 and the three-dimensional information generating unit 240 are implemented by a CPU. However, the present disclosure is not limited in the method of its implementation, and it is sufficient if it is implemented using an arbitrary device.

The advancing direction detection unit 30 has, for example, the shift lever 30a that is built into the vehicle. The shift lever 30a is a lever for changing the gears of the transmission of the movable apparatus 1000. In a case in which the state of the shift lever 30a is drive or low, the movable apparatus 1000 advances forward. In a case in which the state of the shift lever 30a is reverse, the movable apparatus 1000 advances backwards. In this context, the advancing direction detecting unit 30 detects the state of the shift lever 30a, and it is able to detect the advancing direction of the movable apparatus 1000 based on the state of the shift lever 30a that has been detected. For example, the advancing direction detection unit 30 determines that the advancing direction of the movable apparatus 1000 is forward advancing in a case in which the state of the shift lever 30a is drive or low, and determines that the advancing direction of the movable apparatus 1000 is backwards advancing in a case in which the state of the shift lever 30a is reverse. In addition, the advancing direction detection unit 30 outputs the advancing direction of the movable apparatus 1000 that has been detected to the reference frame switching unit 220.

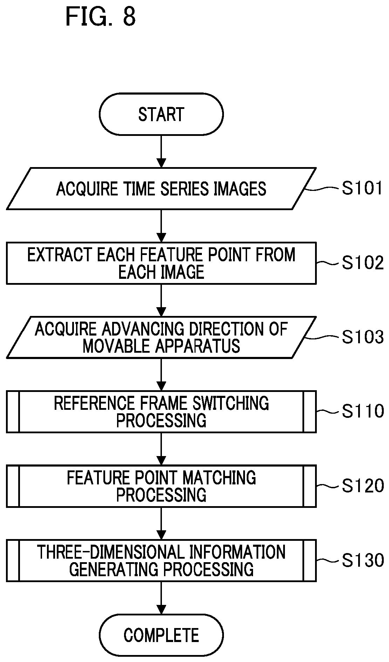

FIG. 8 is a flowchart explaining the series of operations for the integration processing unit 200 of the First Embodiment. The processing for each step that is shown in FIG. 8 is performed in order by the CPU of the integration processing unit 200 executing a computer program.

During step S101, the integration processing unit 200 acquires the time series image img (t), and the time series image img (t+1) from the image capturing unit 10. After this, the processing proceeds to step S102.

During step S102, the integration processing unit 200 extracts the time series feature point group fp (t) from the time series image img (t), and the time series feature point group fp (t+1) from the time series image img (t+1). After this, the processing proceeds to step S103.

During step S103, the integration processing unit 200 acquires the advancing direction of the movable apparatus 1000 using the advancing direction detection unit 30. After this, the processing proceeds to step S110.

During step S110, the integration processing unit 200 inputs the advancing direction of the movable apparatus 1000, the time series image img(t), the time series image img(t+1), the time series feature point group fp(t), and the time series feature point group fp(t+1), and processing is executed by the reference frame switching unit 220. The reference frame switching unit 220 outputs the reference feature point group fp_ref, and the search subject feature point group fp_sub as the processing results. After this, the processing proceeds to step S120.

During step S120, the integration processing unit 200 inputs the reference feature point group fp_ref, the search subject feature point group fp_sub, and the search range map 233a, and processing is executed by the feature point matching unit 230. The feature point matching unit 230 outputs the matching feature point pair as the processing results. After this, the processing proceeds to step S130.

During step S130, the integration processing unit 200 inputs the matching feature point pair and the internal parameters for the camera, and processing is executed by the three-dimensional information generating unit 240. The three-dimensional information generating unit 240 outputs the three-dimensional coordinates for each feature point corresponding to the image capturing position C of the reference frame, and the external parameters for the camera in the image capturing position C' for the search subject frame in relation to the reference frame as the processing results. After this, the series of processing for the integration processing unit 200 is completed.

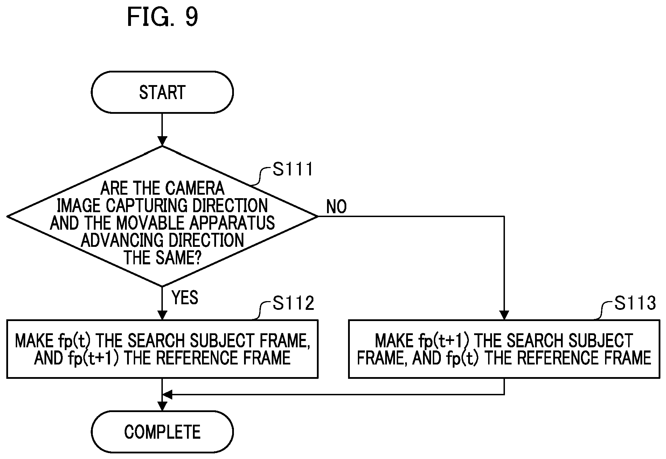

FIG. 9 is a flowchart explaining the series of processing for the reference frame switching unit 220 of the First Embodiment. The processing for each step shown in FIG. 9 is performed in order by the SoC/FPGA of the reference frame switching unit 220 executing processing.

During step S111, the reference frame switching unit 220 determines whether or not a direction that is the same as the advancing direction for the movable apparatus 1000 is included in the image capturing direction for the camera based on the advancing direction for the movable apparatus 10000 and the image capturing direction for the camera that were acquired during step S103. The processing for step S112 is executed in a case in which the reference frame switching unit 220 has determined that a direction that is the same as the advancing direction for the movable apparatus 1000 is included in the image capturing direction for the camera. The processing for step S113 is executed in a case in which the reference frame switching unit 220 has determined that a direction that is the same as the advancing direction for the movable apparatus 1000 is not included in the image capturing direction for the camera. Note that the First Embodiment is a mode in which image capturing is performed in a direction that is the same as or opposite to the advancing direction of the image capturing unit 1000, and therefore, in a case in which a direction that is the same as the advancing direction of the movable apparatus 1000 is not included in the image capturing direction for the camera, it becomes such that the image capturing unit 10 is performing image capturing in the opposite direction of the advancing direction of the movable apparatus 1000.

During step S112, the reference frame switching unit 220 outputs, from among the time series feature point group fp(t), and the time series feature point group fp(t+1) that were acquired during step S102, the feature point group fp (t) to the integration processing unit 200 to serve as a search subject feature point group fp_sub. In addition, during step S112, the reference frame switching unit 220 outputs, from among the time series feature point group fp(t), and the time series feature point group fp(t+1) that were acquired during step S102, the reference feature point group fp (t+1) to the integration processing unit 200 to serve as a reference feature point group fp_ref. After this, the processing is completed.

During step S113, the reference frame switching unit 220 outputs, from among the time series feature point group fp(t) and the time series feature point group fp(t+1) that were acquired during step S102, the feature point group fp(t) to the integration processing unit 200 to serve as a reference feature point group fp_ref. In addition, during step S113, the reference frame switching unit 220 outputs, from among the time series feature point group fp(t) and the time series feature point group fp(t+1) that were acquired during step S102, the feature point group fp(t+1) to the integration processing unit 200 to serve as a search subject reference feature point group fp_sub. After this, the processing is completed.

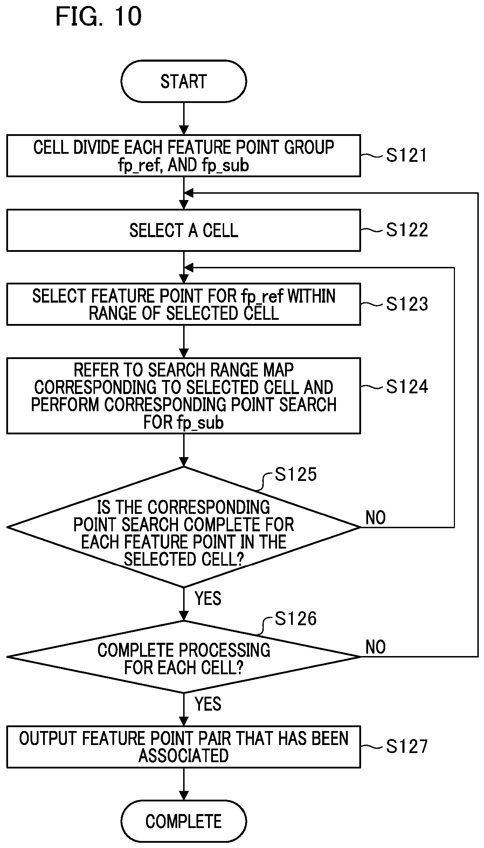

FIG. 10 is a flowchart for explaining the series of processes for the feature point matching unit 230 of the First Embodiment. The processing for each step that is shown in FIG. 10 is performed in order by the CPU of the feature point matching unit 230 executing a computer program.

During step S121, the feature point matching unit 230 performs cell division for both feature point groups that were acquired during step S110, the reference feature point group fp_ref, and the search subject feature point group fp_sub. After this, the processing proceeds to step S122.

During step S122, the feature point matching unit 230 selects one arbitrary cell from among the reference feature point group fp_ref that has been cell divided. After this, the processing proceeds to step S123.

During step S123, the feature point matching unit 230 selects one arbitrary feature point from among the cell that has been selected during step S122. After this, the processing proceeds to step S124.

During step S124, the feature point matching unit 230 references the search range map 233a and performs a corresponding point search for feature points that correspond to the feature point that was selected during step S123 from among the search subject feature point group fp_sub within a search range that corresponds to the cell that was selected during step S122. After this, the processing proceeds to step S125.

During step S125, the feature point matching unit 230 determines whether or not the corresponding point search has been completed for each feature point that is included in the cell that was selected during step S122. In a case in which the feature point matching unit 230 has determined that the corresponding point search has not been completed, the processing for step S123 is executed. In a case in which the feature point matching unit 230 has determined that the corresponding point search has been completed, the processing for step S126 is completed.

During step S126, the feature point matching unit 230 determines whether or not each processing from step S122 to step S125 has been completed for each of the cells that were divided during step S121. In a case in which the feature point matching unit 230 has determined that the processing has not been completed, the processing for step S122 is executed. In a case in which the feature point matching unit 230 has determined that the processing has been completed, the processing for step S127 is completed.

During step S127, the feature point matching unit 230 outputs the matching feature point pair that has been associated during the corresponding point search to the integration processing unit 200. After this, the processing is completed.

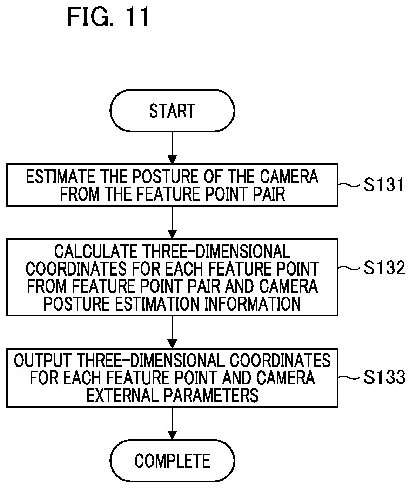

FIG. 11 is a flowchart explaining the series of operations for the three-dimensional information generating unit 240 of the First Embodiment. The processing for each step that is shown in FIG. 11 is performed in order by the CPU of the three-dimensional information generating unit 240 executing a computer program.

During step S131, the three-dimensional information generating unit 240 estimates the posture of the camera based on the matching feature point pair that was acquired during step S120, and the internal parameters for the camera. In this context, the three-dimensional information generating unit 240 acquires the external parameters of the camera of the movement amount and the rotation angle for the camera corresponding to the image capturing position for the reference frame to serve as the estimation results. After this, the processing proceeds to step S132.

During step S132, the three-dimensional information generating unit 240 calculates three-dimensional coordinates for each feature point in relation to the image capturing position of the reference frame based on the matching feature point pair, the internal parameters for the camera, and the external parameters for the camera. After this, the processing proceeds to step S133.

During step S133, the three-dimensional information generating unit 240 outputs the three-dimensional coordinates for each feature point and the external parameters for the camera to the integration processing unit 200. After this, the processing is completed.

As has been explained above, according to the First Embodiment, by switching the reference frame and the search subject frame based on the advancing direction of the movable apparatus, the movement direction for the image capturing position is limited to one direction regardless of changes in the advancing direction of the movable apparatus. It is thereby possible to limit the search range in which the feature point matching occurs in advance.

In addition, it is possible to begin the corresponding point search early without needing to set the search range as internal processing by referencing the search range that has been determined in advance. In addition, by performing the corresponding point search in a search range that has been limited, it is possible to reduce the computational complexity during the feature point matching.

Therefore, it is possible to increase the speed of the feature point matching processing by beginning the feature point matching processing early, and decreasing the computational complexity of the processing. By extension, it is also possible to increase the speed of the SfM and vSLAM processing.

In addition, according to the First Embodiment, the movement direction of the image capturing position is limited to one direction, and therefore, it is not necessary to change the search range according to changes in the advancing direction of the movable apparatus, and it is sufficient if one search range map 233a is stored regardless of the advancing direction of the movable apparatus. Therefore, it is possible to suppress the ROM volume that is necessary for storing the search range map 233a.

In addition, by performing cell division, it becomes sufficient to provide a search range map 233a per each cell, instead of per each pixel, and therefore, it is possible to suppress the ROM volume that is necessary for storing the search range map 233a.

Therefore, it is possible to at least suppress the information for the search range that is used during the performance of the corresponding point search, and to implement the feature point matching processing at a low cost. By extension, it is possible to provide the SfM, and SLAM at a low cost as well.

In addition, according to the First Embodiment, the reference frame and the search subject frame are switched such that the movement direction of the image capturing position becomes the direction facing the camera. By doing so, it becomes such that the image capturing position of the search subject frame has been image captured from farther behind than the image capturing position for the reference frame, and therefore, it is possible to efficiently perform the corresponding point search without the reference feature point and the corresponding feature points leaving the image capturing range for the search subject frame.

### <Second Embodiment>

Next, a Second Embodiment of the present disclosure will be explained. The Second Embodiment feeds back the movement amount for the camera relating to the image capturing position for the reference frame that was calculated by the three-dimensional information generating unit 240 to the reference frame switching unit 220. The Second Embodiment is configured to thereby switch the reference frame for the feature point matching.

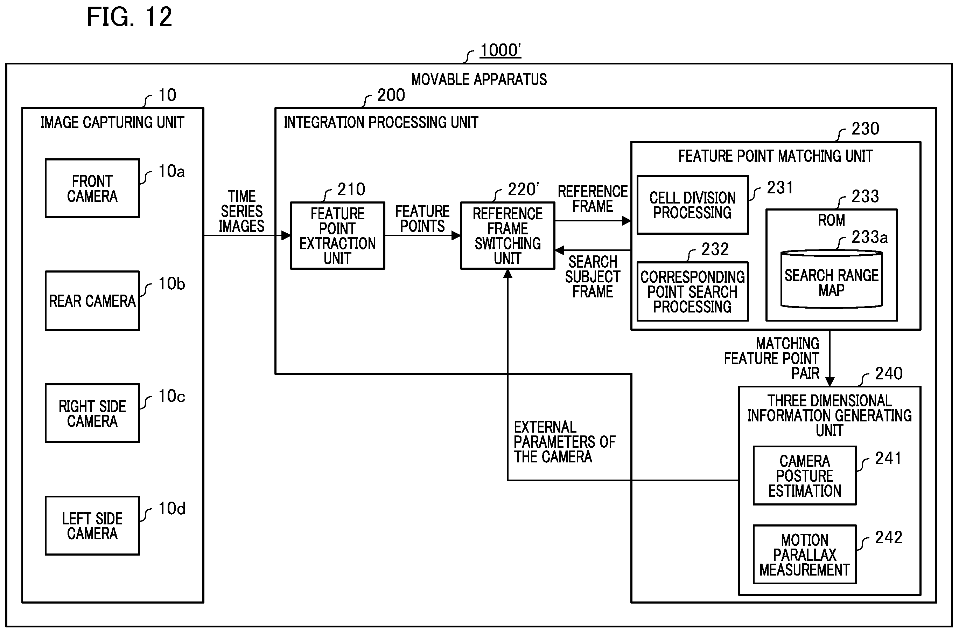

FIG. 12 is a configurational diagram for the movable apparatus 1000' according to the Second Embodiment. The movable apparatus 1000' is, for example, a vehicle. The image capturing unit 10, the feature point extraction unit 210, the feature point matching unit 230, and the three-dimensional information generating unit 240 in FIG. 12 are the same as those in in FIG. 1

The integration processing unit 200 has a reference frame switching unit 220' instead of the reference frame switching unit 220 of FIG. 1. The reference frame switching unit 220' has the function that will be explained below in addition to the configuration of the reference frame switching unit 220. That is, the reference frame switching unit 220' has a reference frame switching function that switches a writing destination pointer for the reference frame and a writing destination pointer for the search subject frame based on external parameters for the camera that have been input from the three-dimensional information generating unit 240. Note that as was explained in the First Embodiment, the external parameters for the camera are the movement amount and rotational angle in relation to the image capturing position for the reference frame.

In this context, the movement amount for the camera is provided such that, for example, the orientation facing the image plane img_ref from the position C of the camera that is shown in FIG. 7 is positive. Note that although generally, there are also coordinate systems for cameras in stereo vision that make the orientation facing the camera from the image plane positive, it is sufficient if it is assumed that in such a case, the positive and negative orientations for the movement amount for the camera that is explained in the Second Embodiment will be reversed.

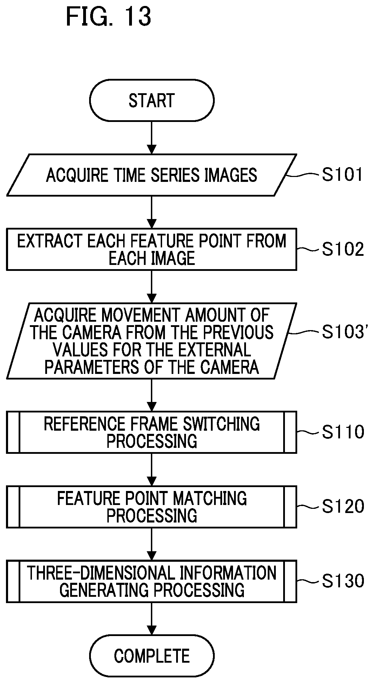

FIG. 13 is a flowchart for explaining the series of processes for the integration processing unit 200 according to the Second Embodiment. Note that step S101, step S102, and step S110 to step S130 in FIG. 13 are the same as those in FIG. 8, and explanations thereof will be omitted.

During step S103', the integration processing unit 200 acquires the movement amount for the camera from the three-dimensional information generating unit 240. After this, the processing proceeds to step S110.

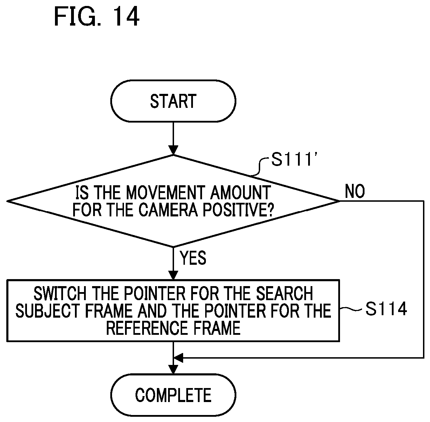

FIG. 14 is a flowchart explaining the series of processing for the reference frame switching unit 220' of the Second Embodiment. The processing for each step that is shown in FIG. 14 is performed in order by the SoC/FPGA of the reference frame switching unit 220' executing processing.

During step S111', the reference frame switching unit 220' determines if the movement amount for the camera is positive or negative based on the movement amount for the camera that has been acquired during step S103'. The processing for step S114 is executed in a case in which the reference frame switching unit 220' has determined that the movement amount for the camera is positive. The processing is completed in a case in which the reference frame switching unit 220' determines that the movement amount for the camera is not positive, that is, that the movement amount for the camera is negative. Note that with respect to the movement amount for the camera in the Second Embodiment, the orientation facing the image plane from the camera is made positive. Therefore, in a case in which the movement amount for the camera is positive, this means that the image capturing unit 10 is capturing images in the same direction as the processing direction of the movable apparatus 1000, and a case in which the movement direction for the camera is negative means that the image capturing unit 10 is capturing images in the opposite direction as the advancing direction of the movable apparatus 1000.

During step S114, the reference frame switching unit 220' switches the writing destination pointer for the time series feature point group fp(t), and the time series feature point group fp(t+1) that were acquired during step S102. That is, the reference frame switching unit 220' switches the writing destination pointer for the feature point group that is currently the search subject feature point group fp_sub and the writing destination pointer for the reference feature point group fp_ref. In addition, the reference frame switching unit 220' switches the writing destination pointer for the feature point group that is currently the reference feature point group fp_ref with the writing destination pointer for the search subject feature point group fp_sub. In this manner, during step S114, the reference frame switching unit 220' outputs the writing destinations for each of the time series feature point group fp(t), and the time series feature point group fp(t+1) that have been switched to the integration processing unit 200. After this, the reference frame switching unit 220' completes the processing.

In this manner, in the Second Embodiment, the movement amount for the camera in relation to the image capturing position for the reference frame that was calculated by the three-dimensional information generating unit 240 is fed back to the reference frame switching unit 220'. In addition, when processing is being performed in the reference frame switching unit 220', it is possible to switch the reference frame without using the advancing direction signal for the movable apparatus 1000 by switching the writing destinations for the time series feature point groups based on whether the movement amount for the camera is positive or negative.

As has been explained above, in the Second Embodiment, the external parameters for the camera that are calculated when three-dimensional information is generated are fed back and the order of the time series images and feature point groups are sorted based on the movement amount of the camera. Due to this, according to the Second Embodiment, it is possible to determine the reference frame without detecting the advancing direction signal of the movable apparatus.

Therefore, it is possible to limit the movement direction of the image capturing position to one direction based on the movement amount of the camera without detecting the advancing direction of the movable apparatus, and therefore, it is possible to increase the speed of the feature point matching processing in the same manner as in the First Embodiment. By extension, it is also possible to increase the speed of the SfM and vSLAM processing.

### <Third Embodiment>

Next, the Third Embodiment of the present disclosure will be explained. In the Third Embodiment, a turning direction of a movable apparatus 1000" is detected based on a steering angle of a steering wheel 30b that is built into the movable apparatus 1000", and this is input into corresponding point processing 232". The Third Embodiment is thereby configured to perform corresponding point processing by referencing the search range map 233a that corresponds to the turning state of the movable apparatus 1000". An advancing direction detection unit 30" that detects the steering angle of the steering wheel 30b is one example of a turning direction detecting unit that detects a turning direction of a movable apparatus. The feature point matching unit 230 searches for each feature point in the search subject image in the search range that has been limited based on the detection results of the advancing direction detecting unit 30".

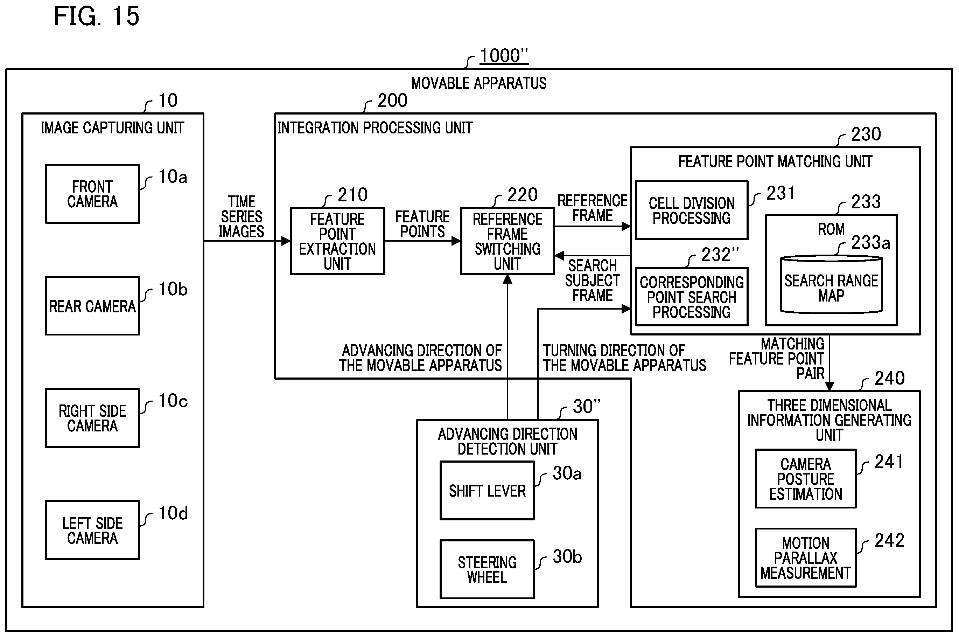

FIG. 15 is a configurational diagram of the movable apparatus 1000" according to the Third Embodiment. The movable apparatus 1000" is, for example, a vehicle. The image capturing unit 10, the feature point extraction unit 210, the reference frame switching unit 220, and the three-dimensional information generating unit 240 in FIG. 15 are the same as those in FIG. 1.

The feature point matching unit 230 has corresponding point search processing 232" instead of the corresponding point search processing 232 of FIG. 1. In addition, the movable apparatus 1000" has an advancing direction detection unit 30" instead of the advancing direction detecting unit 30 of FIG. 1. The advancing direction detecting unit 30" also performs detection of the steering angle of the steering wheel 30b in addition to detecting the state of the shift lever 30a. The steering wheel 30b determines the turning direction of the movable apparatus 1000" according to the steering angle thereof. It is possible for the advancing direction detecting unit 30" to output a steering direction signal of the movable apparatus 1000" by detecting the steering angle of the steering wheel 30b. The corresponding point search processing 232" performs a determination of the turning state of the movable apparatus 1000" in addition to the configuration of the corresponding point search processing 232. The corresponding point search processing 232" performs a determination of the turning state with respect to whether the movable apparatus 1000" is turning left, whether the movable apparatus 1000" is turning right, or whether the movable apparatus 1000" is not turning based on the turning direction signal for the movable apparatus 1000" that has been input from the advancing direction detecting unit 30".

In addition, the corresponding point search processing 232" performs matching within the region that was limited by referencing the search range map 233a that corresponds to the turning state of the movable apparatus 1000" that was stored on the ROM 233 based on the determination results for the turning state. The search range map 233a has a plurality of search reference maps having different search ranges, and for example, has a search range map for when the movable apparatus is turning right, a search reference map for when the movable apparatus is turning left, and a search reference map for when the movable apparatus is advancing straight. The search range map 233a that corresponds to the turning state of the movable apparatus 1000" is made one of, for example, a search range map for when the movable apparatus is turning right, a search range map for when the movable apparatus is turning left, and a search range map for when the movable apparatus is advancing straight.

Note that although in the Third Embodiment, the advancing direction according to forward advancing/backwards advancing of the movable apparatus is not distinguished, as was explained in the First Embodiment, this is because it is possible to limit the movement direction of the image capturing position to one direction regardless of the advancing direction according to forward advancing/backwards advancing of the movable apparatus.

Note that in a case in which the movable apparatus is advancing forwards, advancing parallelly to the ground while turning, or in a case in which the movable apparatus is advancing backwards, ideally, the components that are in the direction perpendicular to the ground for the coordinates for the epipole will not change, and are uniquely determined from the installation position of the camera, the angle that is formed between the installation position of the camera and the ground, and the like. In contrast, in a case in which, for example, the movable apparatus is advancing backwards while turning, the components that are in the parallel direction to the ground for the coordinates of the epipole will move in the same direction as the turning direction. In addition, in a case in which the movable apparatus is for example, advancing forwards while turning, the components that are in the direction parallel to the ground for the coordinates of the epipole will move in the direction opposite to the turning direction.

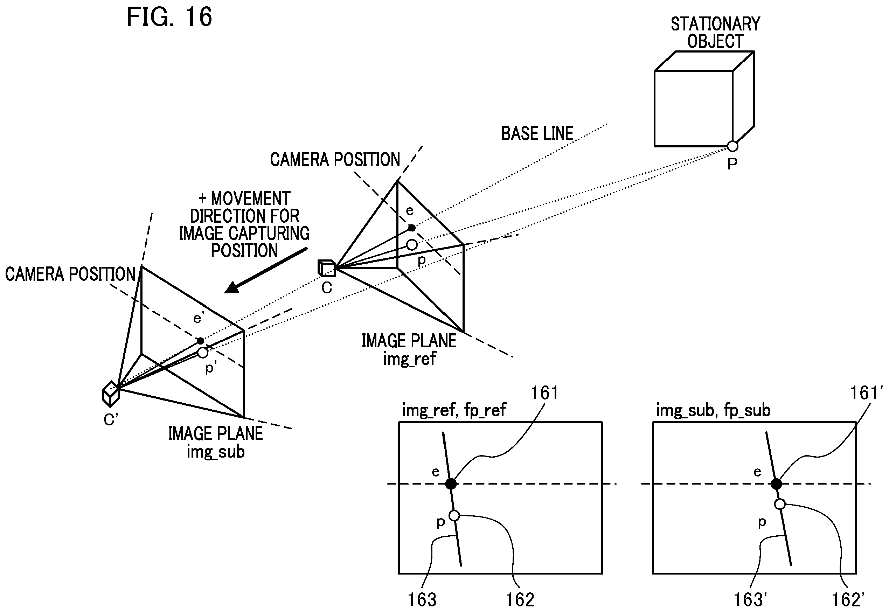

In order for simplicity, the movement direction of the image capturing position, the position of the epipole, and the position of the feature points for when for example, the movable apparatus 1000" has been limited to a case in which for example, backwards advancing is being performed while turning right, are shown in FIG. 16.

FIG. 16 is a diagram explaining a case in which the movable apparatus 1000" is turning right. In FIG. 16, the points e, and e' at which the base line that connects the position C of the camera in the reference frame and the camera position C' in the search subject frame overlap with the image capturing plane in each frame are made the epipole 161, and the epipole 161'. At this time, the movable apparatus 1000" is advancing backwards parallelly to the ground and therefore, both the epipole e, and the epipole e' exist on the camera position. In addition, this is a case in which the movable apparatus 1000" is advancing backwards while turning right, and therefore, the coordinates of direction that is parallel to the ground for the epipole e, and the epipole e' move in the right direction.

In contrast, the point p at which the straight line that connects the position C of the camera with the coordinate P in the real space of the feature points overlaps with the image plane of each frame is made the feature point 162 in the image, and the point p' at which the straight line that connects the position C' of the camera with the coordinate P in the real space of the feature points overlaps with the image plane in each frame is made the feature point 162' in the image. In addition, the straight line that connects the epipole e with the feature point p is made the epipolar line 163, and the straight line that connects the epipole e' with the feature point p' is made the epipolar line 163'. At this time, although due to an epipolar constraint, the epipolar line 163 and the epipolar line 163' are on the same plane, the Third Embodiment is a case in which the movable apparatus 1000" is turning, and therefore the position and slope of the epipolar lines on the image change.

Therefore, in the Third Embodiment, it is not possible to uniquely determine the direction that faces the epipole in relation to the search range for when the feature point transitions from p to p'. However, in a case in which the movable apparatus is turning right while advancing backwards, when the feature point transitions from p to p' as is shown in FIG. 16, the coordinates for the direction that is parallel to the ground for the feature points move in the right direction, and the coordinates for the direction that is perpendicular to the ground for the feature points move in a direction that approaches the camera position.

Symmetry is also assumed in a case in which the movable apparatus is advancing backwards while turning left, and the coordinates for the direction that is parallel to the ground for the feature points move in the left direction, and the coordinates for the direction that is perpendicular to the ground for the feature points move in a direction that approaches the camera position.

Therefore, the search range maps are differentiated at the time of turning right, at the time of turning left, and the time of straight advancing, and the components in the direction perpendicular to the ground in relation to the search range at the time of turning right are limited to the direction that approaches the camera position, and the components in the direction parallel to the ground in relation to the search range at the time of turning right are limited to the direction approaching the right edge of the image. In contrast, symmetry is also assumed for the search range at the time of turning left, and the components parallel to the ground at the time of turning left are limited to the direction approaching the left edge of the image. The search range for the time of straight advancing is limited in the same manner as in the First Embodiment.

By determining the search range in this manner, it is possible to perform the corresponding point search in a search range that has been appropriately limited based on the turning state of the movable apparatus, and it is possible to decrease the computational complexity of the corresponding point search processing 232.

In addition to the configuration of the advancing direction detection unit 30 of FIG. 1, the advancing direction detection unit 30" has, for example, the steering wheel 30b that is built into the vehicle. In addition, the advancing direction detection unit 30" detects the turning direction of the movable apparatus 1000" based on the steering angle of the steering wheel 30b. For example, in a case in which the steering angle of the steering wheel 30b is inclining clockwise, it is determined that the turning direction of the movable apparatus 1000" is a right turn. In addition, in a case in which the steering angle of the steering wheel 30b is inclining counter clockwise, it is determined that the turning direction of the movable apparatus 1000" is a left turn. In addition, in a case in which the steering angle of the steering wheel 30b is not inclining, it is determined that the movable apparatus 1000" is not turning.

Note that generally, turning means rotating as though drawing an arc, and therefore, even if the steering angle of the handle is clockwise, what is generally referred to as the steering direction of the movable apparatus will change based on whether the advancing direction of the movable apparatus is forwards or backwards. However, in this context, the steering direction is defined in the manner explained above regardless of whether the advancing direction of the movable apparatus is forwards or backwards.

Note that although there are various determination criteria for the steering angle of the handle according to the design, it is made such that, for example the angle is positive when the starting point for the steering angle of the handle is 0°, and the handle has been rotated clockwise, and the angle is negative when the starting point for the steering angle of the handle is 0°, and the handle has been rotated counter clockwise. Furthermore, it is also sufficient if this is implemented by preparing both a fixed threshold value for a case in which the handle has been rotated in the positive direction (a right turn threshold value), and a fixed threshold value for a case in which the handle has been rotated in the negative direction (a left turn threshold value), and determining, in a case in which the right turn threshold value has been exceeded, that a right turn is being made, and determining, in a case in which the left turn threshold value has been exceeded, that a left turn is being made.

In addition, the advancing direction detecting unit 30" outputs the turning direction for the movable apparatus 1000" to the corresponding point search processing 232".

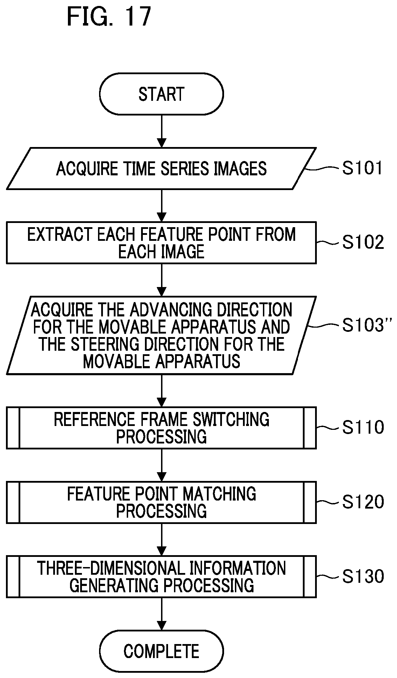

FIG. 17 is a flowchart explaining the series of operations for the integration processing unit 200 according to the Third Embodiment. Note that each of the steps of the step S101, the step S102, and the steps S110 to step S130 in FIG. 17 are the same as those in FIG. 8, and therefore, explanations thereof will be omitted.

During step S103", in addition to the processing for the step S103 in FIG. 8, the integration processing unit 200 acquires the turning direction for the movable apparatus 1000" from the advancing direction detection unit 30". After this, the processing proceeds to step S110.

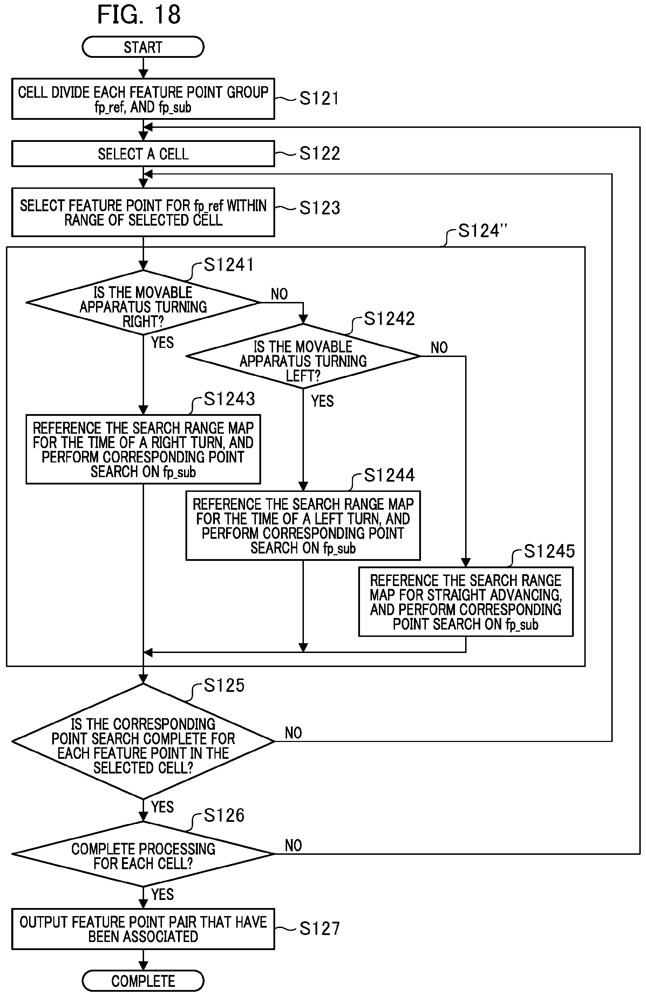

FIG. 18 is a flowchart for explaining the series of processes for the feature point matching unit 230 according to the Third Embodiment. Note that each of the steps of step S121 to step S123, and step S125 to step S127 in FIG. 18 are the same as those in FIG. 10, and explanations thereof will be omitted.

The processing for step S124" references the search range map 233a corresponding to the turning direction of the movable apparatus 1000" based on the turning direction thereof that has been acquired during step S103", and performs the corresponding point search within the search range corresponding to the cell that was selected during step S122. Below, the details of the processing for step S124" will be explained. The processing for step S124" includes the processing for step S1241 to step S1245.

During step S1241, the feature point matching unit 230 determines whether or not the turning direction of the movable apparatus 1000" is a right turn. In a case in which the feature point matching unit 230 has determined that the turning direction is a right turn, the processing for step S1243 is executed. In a case in which the feature point matching unit 230 has determined that the turning direction is not a right turn, the processing for step S1242 is executed.

During step S1242, the feature point matching unit 230 determines whether or not the turning direction for the movable apparatus 1000" is a left turn. In a case in which the feature point matching unit 230 has determined that the turning direction is a left turn, the processing for step S1244 is executed. In a case in which the feature point matching unit 230 has determined that the turning direction is not a left turn, the processing for step S1245 is executed.

During step S1243, the feature point matching unit 230 references the search range map for the time of a right turn. In addition, during step S1243, the feature point matching unit 230 performs the corresponding point search for the feature points corresponding to the feature point that was selected during step S123 from among the search subject feature point group tp_sub in the search range corresponding to the cell that was selected during step S122. After this, the processing proceeds to step S125.

During step S1244, the feature point matching unit 230 references the search range map for the time of a left turn. In addition, during step S1244, the feature point matching unit 230 performs the corresponding point search for the feature points that correspond to the feature point that was selected during step S123 from among the search subject feature point group fp_sub in the search range corresponding to the cell that was selected during step S122. After this, the processing proceeds to step S125.

During step S1245, the feature point matching unit 230 references the search range map for the time of straight advancing. In addition, during step S1245, the feature point matching unit 230 performs the corresponding point search for the feature points that correspond to the feature point that was selected during step S123 from among the search subject feature point group fp_sub in the search range corresponding to the cell that was selected during step S122. After this, the processing proceeds to step S125.

In this manner, during the processing for the corresponding search processing 232", the turning state of the movable apparatus 1000" is determined based on the turning direction thereof that was detected by the advancing direction detecting unit 30". In addition, by referencing the search range map corresponding to the turning state of the movable apparatus 1000", it is possible to perform the corresponding point search by changing the range that is limited in response to changes in the turning direction of the movable apparatus 1000"

As was explained above, according to the Third Embodiment, each search range is determined in advance corresponding to the turning states of the movable apparatus, and the search range is updated in response to changes in the turning direction of the movable apparatus. It is thereby possible to begin the corresponding point search early even in a case in which the turning direction of the movable apparatus changes according to the Third Embodiment.

Therefore, even in a case in which the turning direction of the movable apparatus changes, each search range is determined in advance corresponding to the turning states of the movable apparatus, and the search range is updated in response to the changes in the turning direction of the movable apparatus. It is thereby possible to increase the speed of the feature point matching processing in the same manner as the First Embodiment and the Second Embodiment. By extension, it is also possible to increase the speed of the processing for the SfM and the vSLAM.

### <Fourth Embodiment>

Next, the Fourth Embodiment of the present disclosure will be explained. The Fourth Embodiment is configured to switch the reference frame for the feature point matching based on the advancing direction of a movable apparatus 1000‴ in a camera that captures images in an image capturing direction so as to not include a direction that is the same as or the opposite of the advancing direction of the movable apparatus 1000‴.

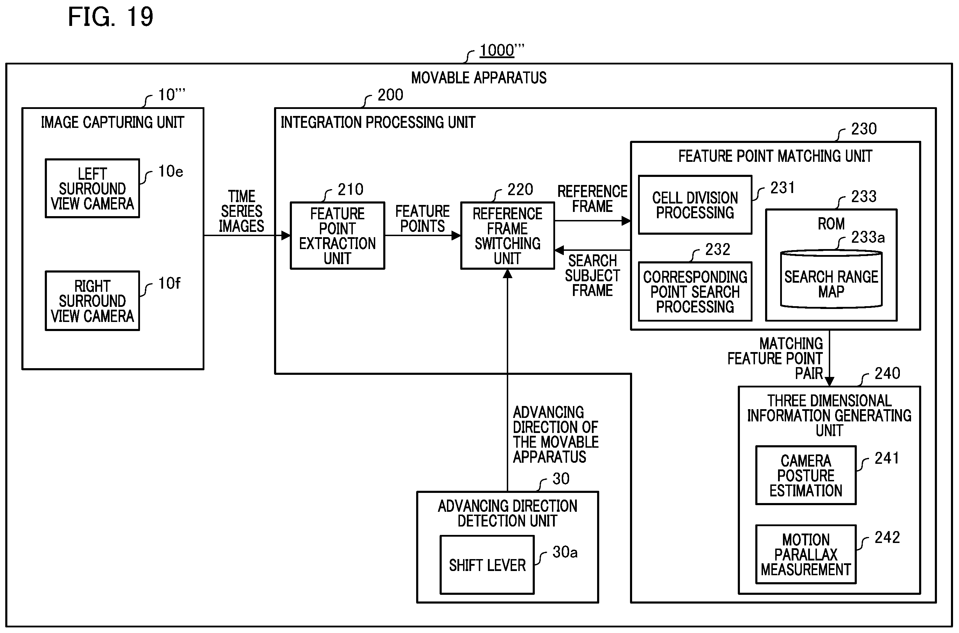

FIG. 19 is a configurational diagram of the movable apparatus 1000" according to the Fourth Embodiment. The movable apparatus 1000‴ is, for example, a vehicle. The integration processing unit 200 and the advancing direction detecting unit 30 in FIG. 19 are the same as those in FIG. 1.

The image capturing unit 10‴ has a right surround view camera 10e and a left surround view camera 10f in addition to the image capturing unit 10 of FIG. 1. The right surround view camera 10e and the left surround view camera 10f are cameras that are used in a surround view system (a system that is able to confirm video images of the surroundings of a vehicle) for the movable apparatus 1000‴, which is a vehicle.

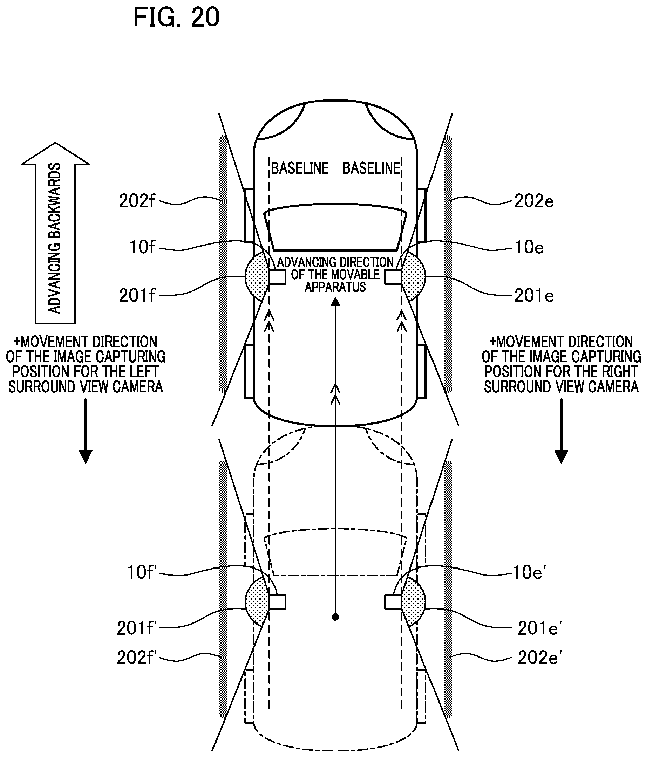

The installation positions of the right surround view camera 10e and the left surround view camera 10f of the image capturing unit 10‴ are shown in FIG. 20. Note that although there are cases in which the advancing direction of the movable apparatus 1000‴ is forward advancing, as well as cases in which the advancing direction of the movable apparatus 1000‴ is backwards advancing, a representative example has been shown in FIG. 20 of a case in which the advancing direction of the movable apparatus 1000‴ is forward advancing. In FIG. 20, the movable apparatus 1000‴ at the time t is shown using a broken line, and the movable apparatus 1000‴ at the time t+1 is shown using a solid line.

The image capturing direction for the right surround view camera 10e is an image capturing direction 201e, and the image capturing direction for the right surround view 10e' is the image capturing direction 201e'. The image capturing direction for the left surround view camera 10f is the image capturing direction 201f, and the image capturing direction for the left surround view camera 10f' is the image capturing direction 201f'. The right surround view camera 10e and the left surround view camera 10f are attached at orientations such that they cannot capture images of the direction that is the same as the advancing direction of the movable apparatus 1000‴ and the direction that is opposite the advancing direction of the movable apparatus 1000"'.

In this context, the image plane for when image capturing has been performed from the position of the right surround view camera 10e at the time t+1 is made 202e, and the image plane for when image capturing has been performed from the position of the right surround view camera 10e' at the time t is made 202e'. In this case, the epipole at which the base line connecting the position of the right surround view camera 10e from the time t+1 with the position of the right surround view camera 10e' at the time t overlaps with the image plan 202e, and the epipole at which the base line connecting the position of the right surround view camera 10e from the time t+1 with the position of the right surround view camera 10e' at the time t overlaps with the image plan 202e' do not appear in the captured image. However, an epipole exists at an infinite point that extends the right edge of the captured image, and an epipole exists at an infinite point that extends the left edge of the captured image.

In addition, the image plane for when image capturing has been performed from the position of the left surround view camera 10f for the time t+1 is made 202f, and the image plane for when image capturing has been performed from the position of the left surround view camera 10f' at the time t is made 202f'. In this case, the epipole at which the base line connecting the position of the left surround view camera 10f from the time t+1 with the position of the left surround view camera 10f' at the time t overlaps with the image plan 202f, and the epipole at which the base line connecting the position of the left surround view camera 10f from the time t+1 with the position of the left surround view camera 10f' at the time t overlaps with the image plan 202f' do not appear in the captured image. However, an epipole exists at an infinite point that extends the right edge of the captured image, and an epipole exists at an infinite point that extends the left edge of the captured image.

In both cases, it is possible to approximate the epipolar line that connects the epipole and a feature point as a line that is parallel to the ground and the camera position of the right surround view camera or a line that is parallel to the ground and the camera position of the left surround view camera. Therefore, the coordinates of the direction perpendicular to the ground for the feature points in the image ideally do not change, and the coordinates of the direction that is perpendicular to the ground of the feature points are transitioned to a direction that is opposite to the movement direction of the image capturing position based on the movement direction of the image capturing position. For example, the feature point group for when there has been a transition from the image plane 202e to the image plane 202e' transitions to the left direction in the image, and the feature point group for when there has been a transition from the image plane 202f to the image plane 202f' transitions to the right direction in the image. Therefore, when performing the corresponding point search, it is sufficient if the search range is suitably limited based on the movement direction for the image capturing position that has been explained above.

In the First Embodiment in FIG. 1, as was explained above, the reference frame switching unit 220 switches the writing destination pointer for the reference frame and the writing destination pointer for the search subject frame based on the advancing direction signal of the movable apparatus 1000.

In the Fourth Embodiment, in a case in which the advancing direction of the movable apparatus 1000‴ is advancing forward, the reference frame switching unit 220 for example, makes the feature point group fp (t) the search subject feature point group fp_sub, and makes the feature point group fp (t+1) the reference feature point group fp_ref. In addition, in a case in which the advancing direction of the movable apparatus is backwards advancing, for example, the reference frame switching unit 220 makes the feature point group fp (t+1) the search subject feature point group fp_sub, and makes the feature point group fp(t) the reference feature point group fp_ref.

In the Fourth Embodiment, by doing so, even if there is a configuration in which image capturing is performed with an image capturing direction so as to not include the direction that is the same as the advancing direction of the movable apparatus 1000‴ and the direction that is the opposite of the advancing direction of the movable apparatus 1000‴, it is possible to limit the movement direction of the image capturing position by switching the reference frame.

As has been explained above, according to the Fourth Embodiment, first, the time series feature point group that is made the reference feature point group is defined based on the advancing direction of the movable apparatus. By doing so, even if there is a configuration in which image capturing is performed with an image capturing direction so as to not include the direction that is the same as the advancing direction of the movable apparatus 1000‴ and the direction that is the opposite of the advancing direction of the movable apparatus 1000‴, it is possible to limit the movement direction of the image capturing position by switching the reference frame.

Therefore, even if there is a configuration in which image capturing is performed with an image capturing direction so as to not include the direction that is the same as the advancing direction of the movable apparatus and the direction that is the opposite of the advancing direction of the movable apparatus, it is possible to limit the movement direction of the image capturing position to one direction, and therefore, it is possible to increase the speed of the feature point matching processing in the same manner as in the First Embodiment and the Second Embodiment. By extension, it is also possible to increase the speed of the processing for the SfM and the vSLAM.

Although above, a detailed explanation has been given of the present disclosure based on embodiments thereof, the present disclosure is not limited to these specific embodiments, and the present disclosure also includes various modes within a range that does not deviate from the gist of this disclosure. Portions of the above-described embodiments may also be appropriately combined.

In addition, the present disclosure also includes cases in which a software program that realizes the functions of the above-described embodiments is provided to a system or device having a computer that is capable of executing a program directly from a storage medium or by using wired/wireless communications, and this program is executed.

Therefore, a program code itself that is provided to and installed on a computer in order to realize the function processing of the present disclosure using this computer is also included in the present disclosure. That is, the computer program for realizing the function processing of the present disclosure is itself also included in the present disclosure.

In this case, the form of the program does not matter, such as an object code, a program executed by an interpreter, script data supplied to an OS, and the like, as long as it has the functions of the program. As the storage medium for providing the program, for example, a magnetic recording medium such as a hard disk, a magnetic tape, and the like, an optical/magneto-optical storage medium, a non-volatile semiconductor memory, and the like may also be used.

In addition, as the provision method for the program, a method may be used in which the computer program that forms the present disclosure is stored on a server on a computer network, and a client computer with a connection downloads the computer program.

### (Other Embodiments)

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image processing apparatus (1000) comprising:
image capturing position movement direction limiting means for selecting, from a plurality of time series images that have been acquired from an image capturing means (10) that is disposed on a movable apparatus (1000) for capturing images of surroundings of the movable apparatus, a first image that was image captured when a position of the movable apparatus was a first position, and a second image that was image captured when the position of the movable apparatus was a second position, and controlling a movement direction of an image capturing position to the first position and the second position;
feature point matching means (230) for selecting a reference image and a search subject image from the first image and the second image, and performing feature point association; and
reference image switching means (220) for switching the reference image based on information showing a movement direction of the movable apparatus, wherein
the feature point matching means searches for each feature point in the search subject image within a search range that has been limited based on the movement direction of the movable apparatus.

2. The image processing apparatus according to claim 1, wherein the feature point matching means determines the search range based on range information that has been determined in advance, and searches for each feature point in the search subject image.

3. The information processing apparatus according to claim 1 or 2 further comprising advancing direction detecting means (30) for detecting an advancing direction of the movable apparatus, wherein
information showing the movement direction of the movable apparatus is generated based on a detection result of the advancing direction detecting means.

4. The image processing apparatus according to any one of claims 1 to 3 further comprising image capturing position posture calculating means (241) for calculating information relating to a position and a posture of the image capturing means, wherein
the image capturing position posture calculating means generate information showing the movement direction based on the information relating to the position and the posture of the image capturing means.

5. The image processing apparatus according to any one of claims 1 to 4 further comprising turning direction detecting means (30") for detecting a turning direction for the movable apparatus,
wherein the feature point matching means searches for each feature point in the search subject image within a search range that has been limited based on a detection result of the turning direction detecting means.

6. The image processing apparatus according to any one of claims 1 to 5, wherein the image capturing means is disposed on the movable apparatus by making the image capturing direction of the image capturing means include a direction that is the same as an advancing direction of the movable apparatus or a direction that is opposite to the advancing direction of the movable apparatus.

7. The image processing apparatus according to claim 6, wherein reference image switching means switches the reference image such that the movement direction of the movable apparatus becomes a direction that is opposite to the image capturing direction of the image capturing means.

8. A method for controlling an image processing apparatus, the method comprising:
an image capturing position movement direction limiting step of selecting, from among a plurality of time series images that have been acquired from an image capturing means that is disposed on a movable apparatus for capturing images of surroundings of the movable apparatus, a first image that was image captured when a position of the movable apparatus was a first position, and a second image that was image captured when the position of the movable apparatus was a second position, and controlling a movement direction of an image capturing position to the first position and the second position;
feature point matching step of selecting a reference image and a search subject image from the first image and the second image, and performing feature point association; and
reference image switching step of switching the reference image based on information showing a movement direction of the movable apparatus, wherein
in the feature point matching step, each feature point in the search subject image is searched for within a search range that has been limited based on the movement direction of the movable apparatus.

9. A non-transitory storage medium storing a program of an image processing apparatus, causing a computer to perform each step of a method for the image processing apparatus, the method comprising:
an image capturing position movement direction limiting step of selecting, from among a plurality of time series images that have been acquired from an image capturing means that is disposed on a movable apparatus for capturing images of surroundings of the movable apparatus, a first image that was image captured when a position of the movable apparatus was a first position, and a second image that was image captured when a position of the movable apparatus was a second position, and controlling a movement direction of an image capturing position to the first position and the second position;
feature point matching step of selecting a reference image and a search subject image from the first image and the second image, and performing feature point association; and
reference image switching step of switching the reference image based on information showing a movement direction of the movable apparatus; wherein
in the feature point matching step, each feature point in the search subject image is searched for within a search range that has been limited based on the movement direction of the movable apparatus.
